# FASCICULE DE BREVET EUROPEEN

(11) **EP 4 066 235 B1**
(45) Date de publication et mention de la délivrance du brevet: **27.12.2023**
(21) Numéro de dépôt: 20820496.6
(22) Date de dépôt: 19.11.2020
(51) Int. Cl.: G10K 11/16, G10K 11/172, F02C 7/24, F02C 7/045, F02K 1/64, F02K 1/82

(54) **PASTILLE RESONANTE ET CELLULE DE TRAITEMENT ACOUSTIQUE DOTEE D'UNE TELLE PASTILLE**
RESONANZ-PATCH UND AKUSTISCHE BEHANDLUNGSZELLE MIT EINEM SOLCHEN PATCH
RESONATING PATCH AND ACOUSTIC TREATMENT CELL PROVIDED WITH SUCH A PATCH

(30) Priorité: 29.11.2019 FR 1913517
(43) Date de publication de la demande: 05.10.2022
(73) Titulaire: SAFRAN AIRCRAFT ENGINES, 75015 Paris (FR); Centre national de la recherche scientifique, 75016 Paris (FR); Université du Mans, 72000 Le Mans (FR)
(72) Inventeur: REGNARD, Josselin, David, Florian, 77550 MOISSY-CRAMAYEL (FR); ABILY, Thibault, 77550 MOISSY-CRAMAYEL (FR); DURAND, Stéphane, Bernard, 72700 PRUILLE-LE-CHETIF (FR)
(74) Mandataire: Cabinet Beau de Loménie
(86) Numéro de dépôt international: PCT/FR2020/052141
(87) Numéro de publication internationale: WO 2021/105595

(56) Documents cités:
- US-A1- 2004 045 766
- US-A1- 2006 219 477
- US-A1- 2013 341 119
- US-A1- 2015 041 248
- US-B1- 6 274 216

## Description

### Domaine Technique

L'invention concerne le domaine de l'amortissement d'ondes sonores émises par une turbomachine d'un aéronef, et plus particulièrement le traitement des ondes sonores au niveau des inverseurs de poussée de la turbomachine.

### Technique antérieure

Lorsqu'une turbomachine est en fonctionnement, l'interaction entre l'écoulement et les parties solides de la turbomachine sont responsables de la génération de bruits qui se propagent de part et d'autre de la turbomachine.

D'après le document US 2013/341119 A1, on connaît une pastille résonante de traitement acoustique pour cellule de traitement acoustique d'un anneau acoustique d'une turbomachine d'un aéronef, la pastille résonante comprenant un septum, le septum comportant un bandeau périphérique s'étendant le long du périmètre du septum, le septum comprenant des découpes définissant entre elles des lamelles déformables ayant au moins une extrémité solidaire du bandeau périphérique.

Un des moyens d'atténuer ce rayonnement acoustique est d'intégrer des moyens de traitement acoustique au niveau des surfaces en contact avec les ondes sonores. Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont généralement des matériaux composites de type sandwich emprisonnant un nid d'abeille formant des cellules d'absorption acoustique, dont les propriétés absorbantes sont en partie obtenues grâce au principe des résonateurs de Helmholtz.

Il est connu par exemple dans l'état de la technique des panneaux acoustiques à un seul degré de liberté, ou SDOF pour « Single degree of freedom » en anglais, qui présentent une structure classique en nid d'abeilles de panneaux de traitement acoustique garnissant les parois de la nacelle d'une turbomachine.

Les traitements acoustiques à base de résonateurs tels que les résonateurs d'Helmholtz, les résonateurs ¼ d'onde, ou encore les tubes de Quincke sont accordés par rapport à des dimensions caractéristiques qui fixent leurs plages fréquentielles d'atténuation. Les fréquences d'accords correspondant à l'atténuation de ce genre de résonateur sont liées à la longueur d'onde et sont donc inversement proportionnelles ses dimensions caractéristiques. En d'autres termes pour atténuer à plus basses fréquences, il faut de grandes dimensions du résonateur.

De par le principe de fonctionnement des technologies de panneau de traitement acoustique utilisant des cavités résonnantes, l'encombrement radial, c'est-à-dire l'épaisseur radiale, des panneaux de traitement acoustique dépend de la fréquence de traitement ciblée pour obtenir un maximum d'efficacité en termes d'atténuation acoustique.

Or, les architectures moteurs tendent vers une augmentation du taux de dilution à vitesse de rotation de soufflante plus lente. Autrement dit, les architectures présentent de plus en plus des vitesses de rotation des roues à aubes de plus en plus lentes et un nombre d'aubes sur les roues à aubes de plus en plus petit, ce qui entraîne une baisse des fréquences dominantes du bruit associé au module comprenant la soufflante et l'étage redresseur, ou module « fan-OGV » en anglais pour « Outlet Guide Vane ». Cette augmentation du taux du rapport des débits traversant la veine secondaire par rapport à la veine primaire, aussi appelé « bypass ratio » en anglais, impose un élargissement du diamètre des soufflantes et par conséquent une augmentation des dimensions de la nacelle. Ces dimensions élevées ont un impact négatif sur la trainée du turboréacteur et donc sur la consommation spécifique. Pour garantir des gains, il convient de minimiser l'empreinte aérodynamique des nacelles en diminuant leurs épaisseurs et longueurs.

De ce fait, l'adéquation entre l'épaisseur optimale des panneaux acoustiques et l'encombrement disponible dans les nacelles n'est, actuellement, pas satisfaite.

En effet, le bruit de soufflante se décale vers le bas du spectre et les surfaces et épaisseurs disponibles pour l'intégration de panneaux de traitement acoustique sur la partie moteur et sur la nacelle de la turbomachine (principal levier de réduction du bruit) deviennent de plus en plus réduites. Face à ces contraintes, les traitements acoustiques conventionnels, consistants en des structures « nid d'abeille », ne sont plus suffisamment efficaces en basses fréquences pour préserver les critères d'intégration établis, notamment l'épaisseur nécessaire à l'accord du résonateur en basse fréquence notamment.

Il existe ainsi un besoin de développer des nouvelles solutions de traitements acoustiques plus compactes, peu invasives et plus efficaces à basses fréquences.

### Exposé de l'invention

L'invention vise à proposer une solution de traitement acoustique optimisée pour des atténuations à basses fréquences et dont le spectre d'atténuation est plus large dans un encombrement réduit permettant d'être intégrée dans des architectures propulsives à taux de dilution élevé.

Dans un objet de l'invention, il est proposé une pastille résonante de traitement acoustique pour cellule de traitement acoustique d'un panneau acoustique d'une turbomachine d'un aéronef, la pastille résonante comprenant une plaque résonante, un transducteur et un circuit électrique électriquement raccordé au transducteur, la plaque résonante comportant un bandeau périphérique s'étendant le long du périmètre de la plaque.

Selon une caractéristique générale de l'invention, la plaque résonante comprend des découpes définissant entre elles des lamelles déformables ayant au moins une extrémité solidaire du bandeau périphérique.

Les lamelles formées par les découpes sur la pastille résonante selon l'invention offre un couplage vibroacoustique avec les ondes de pression permettant d'optimiser l'atténuation basse fréquence dans un encombrement restreint.

Les découpes forment des fentes qui permettent à la fois, de par leur fine épaisseur, de générer des pertes énergétiques non négligeables sous forme de chaleur grâce à des propriétés visco-thermiques, et d'ajouter de l'inertie au fluide traversant la plaque et donc de décaler la fréquence d'accord de la pastille résonante vers des fréquences plus basses encore.

L'intégration d'un couplage électromagnétique grâce à l'utilisation d'une transduction permet de générer une énergie électrique aux bornes de ce matériau. L'énergie captée peut être réutilisée ensuite pour piloter la ou les fréquence(s) d'accord du système, ou dissipée en chaleur afin d'accentuer l'effet d'absorption du système, ou récupérée pour une autre utilisation.

La combinaison du système mécanique résonant formé par les lamelles de la plaque résonante avec le système électrique passif ou semi-passif résonant et/ou dissipatif formé par le transducteur permet ainsi d'avoir, lorsque cette pastille est intégrée dans une cellule de traitement acoustique de panneau de traitement acoustique, de meilleurs résultats de traitement acoustique à basses fréquences tout en limitant l'encombrement des cellules de traitement acoustique et donc des panneaux de traitement acoustique.

En outre, la pastille résonante selon l'invention est appropriée pour une utilisation avec un écoulement rasant avec forte prise au fluide d'écoulement, grâce aux lamelles et au transducteur.

Selon un premier aspect de la pastille résonante, les découpes peuvent être des découpes rectilignes définissant entre elles des lamelles polygonales.

Les découpes rectilignes sont plus faciles à réaliser et forment des lamelles polygonales présentant une meilleure résistance à l'usure.

Selon un deuxième aspect de la pastille résonante, la pastille résonante peut comprendre au moins deux lamelles de dimensions différentes ce qui permet d'élargir la plage fréquentielle de traitement acoustique.

Selon un troisième aspect de la pastille résonante, la plaque résonante peut avoir une forme s'inscrivant dans un cercle dont le diamètre est compris entre 5 et 50 mm, et les lamelles peuvent avoir une longueur comprise entre 1 et 50 mm.

La forme circulaire de la pastille résonante permet une intégration simplifiée dans des cols acoustiques ou des conduits.

Dans les structures nid d'abeilles, les pastilles résonantes de forme hexagonales seront priviligiées.

Selon un quatrième aspect de la pastille résonante, les lamelles peuvent comprendre une largeur comprise entre 0,5 et 20 mm.

Le nombre de lamelles au sein de la plaque résonante est directement lié à leur largeur. Les lamelles peuvent avoir une largeur réduite pour augmenter le nombre de lamelles et ainsi améliorer la bande passante du traitement Selon un cinquième aspect de la pastille résonante, les lamelles peuvent avoir une épaisseur comprise entre 20 µm et 2 mm.

Selon un sixième aspect de la pastille résonante, les découpes, c'est-à-dire les espaces, voire les fentes, entre les lamelles peuvent avoir une largeur comprise entre 10 µm et 1 mm.

La largeur des fentes correspondant à la découpe en lamelles est un critère important pour la dissipation acoustique en raison des mécanismes visco-thermiques qui se créent entre chaque lamelle lors de leur vibration.

Selon un septième aspect de la pastille résonante, les découpes peuvent être parallèles entre elles.

Dans le cas d'une pastille résonante circulaire, les découpent parallèles permettent de facilement former des lamelles de dimensions différentes et ainsi d'augmenter la plage fréquentielle de traitement acoustique.

Dans une variante, deux découpes adjacentes peuvent être dépourvues de parallélisme.

Les découpes non parallèles, permettent d'obtenir des lamelles à largeur non constantes et ainsi d'avoir un second levier d'action sur les fréquences de résonance des lamelles et donc de la plage de fréquence d'atténuation possible.

Selon un huitième aspect de la pastille résonante, les lamelles peuvent comprendre deux extrémités selon la direction de la longueur, les deux extrémités étant solidaires du bandeau périphérique.

Une lamelle fixée des deux côtés comporte l'avantage d'être plus robuste du fait de son débattement/déformation moins important.

Selon un neuvième aspect de la pastille résonante, la plaque peut comprendre un matériau avec un module de Young élevé pour limiter les risques de rupture tout en limitant la masse volumique et ainsi garder une certaine flexibilité. Des propriétés similaires se retrouvent par exemple sur des matériaux comme le Silicium qui présente un module de Young de 100 GPa ou le Titane qui présente un module de Young de 114 GPa, le module de Young étant le module d'élasticité longitudinale ou module de traction d'un matériau représentant la constante reliant la contrainte de traction ou de compression et le début de déformation d'un matériau élastique isotrope.

Selon un dixième aspect de la pastille résonante, le transducteur peut être un transducteur électrodynamique comportant une couche mince d'un matériau électriquement conducteur sur les lamelles et un aimant.

Le transducteur électrodynamique est très simple à mettre en oeuvre avec un dépôt de cuivre sur la partie mobile du concept et l'ajout d'un aimant magnétique à l'arrière. Il présente également une bonne robustesse et une bonne versatilité.

Dans ce mode de réalisation, l'aimant peut être intégré de manière annulaire et une bobine de cuivre peut être déposée aux endroits présentant le maximum de débattement.

Selon un onzième aspect de la pastille résonante, le transducteur peut être un transducteur piézoélectrique comportant une couche mince sur les zones de déformations maximales des lamelles, telle qu'aux extrémités des lamelles solidaires de la bande périphérique, pour maximiser l'effet selon les phases.

Passé une certaine température (qui dépend du matériau magnétique) l'aimant du transducteur électrodynamique se démagnétise de façon permanente, détruisant ainsi la transduction. Comme pour le transducteur électrodynamique il existe une température de Curie à laquelle le transducteur piézoélectrique perd ses propriétés. Cependant contrairement à l'aimant, le piézoélectrique le redevient en descendant la température.

Dans un autre objet de l'invention, il est proposé une cellule de traitement acoustique comprenant une enceinte, une cavité délimitée par l'enceinte, et une pastille résonante telle que définie ci-dessus et disposée dans la cavité.

Selon un premier aspect de la cellule de traitement, la cellule peut comprendre en outre une grille de protection montée sur une extrémité de l'enceinte destinée à être en regard d'un écoulement fluidique.

La grille de protection comprend une structure perforée, micro-perforée ou un tissu grillagé de protection, ou wiremesh de protection en anglais, pour réduire l'impact direct de l'écoulement.

Dans un objet de l'invention, il est proposé un panneau de traitement acoustique destiné à être disposé sur au moins une paroi d'un turboréacteur en contact avec un écoulement fluidique, le panneau comprenant une première plaque, une seconde plaque parallèle à la première plaque et présentant une première face destinée à être en contact avec un écoulement fluidique et une seconde face en regard de la première plaque.

Selon une caractéristique générale de l'invention, le panneau de traitement acoustique peut comprendre en outre des cellules de traitement acoustique telle que définie ci-dessus s'étendant entre les première et seconde plaques.

Dans un autre objet de l'invention il est proposé un turboréacteur comprenant une nacelle dotée d'au moins une paroi comprenant au moins un panneau de traitement acoustique tel que défini ci-dessus.

Le panneau de traitement acoustique offre la possibilité d'incorporer une technologie amortissante sur une partie fixe du turboréacteur, telle qu'une nacelle ou un carter, qui est moins contrainte pour contrôler des vibrations de la partie tournante.

Le turboréacteur comprend une nacelle, un carter intermédiaire et un carter interne coaxiaux et définissant une direction axiale et une direction radiale.

Les lamelles des plaques résonantes des cellules de traitement acoustique comprennent une orientation définie par un angle compris entre -45° et 45° par rapport à la direction axiale de la turbomachine.

### Brève description des dessins

[Fig. 1] La figure 1 présente une vue en section d'un turboréacteur selon un mode de réalisation de l'invention, dans un plan longitudinal du turboréacteur.
[Fig. 2] La figure 2 illustre une vue partielle en perspective d'un panneau de traitement acoustique selon un mode de réalisation de l'invention.
[Fig. 3] La figure 3 représente une vue schématique en perspective d'une cellule de traitement acoustique 18 du coeur 12 du panneau de traitement acoustique 10 de la figure 2.
[Fig. 4] La figure 4 représente une vue en perspective de la plaque résonante 21 de la pastille résonante 20 de la cellule 18 de la figure 3 selon un premier mode de réalisation.
[Fig. 5] La figure 5 représente une vue de dessus de la plaque résonante 21 de la figure 4 selon une première orientation par rapport à un écoulement fluidique.
[Fig. 6] La figure 6 représente une vue de dessus de la plaque résonante 21 de la figure 4 selon une seconde orientation par rapport à un écoulement fluidique.
[Fig. 7] La figure 7 représente une vue en perspective de la plaque résonante 21 de la pastille résonante 20 de la cellule 18 de la figure 3 selon un deuxième mode de réalisation.
[Fig. 8] La figure 8 représente une vue de dessus de la plaque résonante 21 de la figure 7 selon une première orientation par rapport à un écoulement fluidique.
[Fig. 9] La figure 9 représente une vue de dessus de la plaque résonante 21 de la figure 7 selon une seconde orientation par rapport à un écoulement fluidique.
[Fig. 10] La figure 10 présente une vue en perspective d'une pastille résonante 20 avec un transducteur 22 électrodynamique selon un mode de réalisation.
[Fig. 11] La figure 11 représente une vue de dessus de la plaque résonante 21 de la pastille résonante 20 selon un troisième mode de réalisation.
[Fig. 12] La figure 12 représente une vue de dessus de la plaque résonante 21 de la pastille résonante 20 selon un quatrième mode de réalisation.
[Fig. 13] La figure 13 représente une vue de dessus de la plaque résonante 21 de la pastille résonante 20 selon un cinquième mode de réalisation.

### Description des modes de réalisation

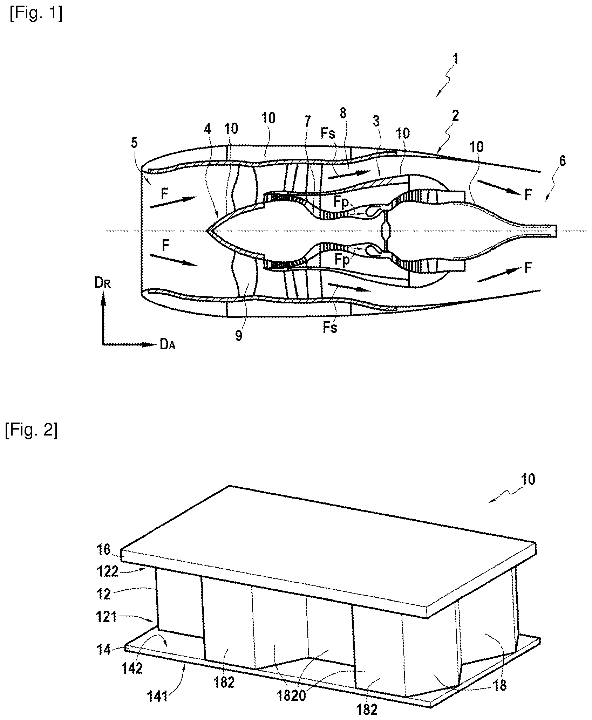

Sur la figure 1 est représentée une vue en section d'un turboréacteur 1 selon un mode de réalisation de l'invention, dans un plan longitudinal du turboréacteur 1.

Le turboréacteur 1 comprend une nacelle 2, un carter intermédiaire 3 et un carter interne 4. La nacelle 2 et les deux carters 3 et 4 sont coaxiaux et définissent une direction axiale D_{A} et une direction radiale D_{R}. La nacelle 2 définit à une première extrémité un canal d'entrée 5 d'un écoulement de fluide et à une seconde extrémité, opposée à la première extrémité, un canal d'échappement 6 d'un écoulement de fluide. Le carter intermédiaire 3 et le carter interne 4 délimitent entre eux une veine primaire 7 d'écoulement de fluide. La nacelle 2 et le carter intermédiaire 3 délimitent entre eux une veine secondaire 8 d'écoulement de fluide. La veine primaire 7 et la veine secondaire 8 sont disposés selon une direction axiale D_{A} du turboréacteur 1 entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire Fp circulant dans la veine primaire 7 et en un flux secondaire Fs circulant dans la veine secondaire 8.

Le turboréacteur 1 comprend en outre des panneaux de traitement acoustique 10 configurés pour atténuer les ondes acoustiques émises par le turboréacteur 1 avant que ces ondes ne s'échappent à l'extérieur, radialement, de la nacelle 2 du turboréacteur 1.

Chaque panneau de traitement acoustique 10 est configuré pour atténuer des ondes acoustiques dont la fréquence appartient à une plage de fréquences prédéterminée. Dans le mode de réalisation illustré sur la figure 1, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale D_{A} et notamment sur la portion portant la soufflante 9, et, d'autre part, sur une portion en aval du carter intermédiaire 3.

Sur la figure 2 est représentée une vue partielle en perspective d'un panneau de traitement acoustique 10 selon un mode de réalisation de l'invention.

En référence à la figure 2, le panneau de traitement acoustique 10 comporte un coeur 12, une couche d'entrée 14 et une couche réfléchissante 16.

Le coeur 12 présente, dans le mode de réalisation illustré sur la figure 2, une structure en nid d'abeille. Plus précisément, le coeur 12 comporte une pluralité d'alvéoles 18, agencées selon une structure en nid d'abeilles connue. Chaque alvéole 18 forme une cellule de traitement acoustique pour l'absorption d'ondes sonores présentant une forme cylindrique à base hexagonale. Chaque cellule de traitement acoustique 18 comprend ainsi une cavité résonante 180 de forme cylindrique à base hexagonale et une enceinte 182 comportant 6 parois 1820 s'étendant entre la couche d'entrée 14 et la couche réfléchissante 16.

Dans des variantes, la structure alvéolaires du coeur 12 pourraient être formées de cellules acoustiques cylindriques à base circulaires, ou autre, voire quelconque.

Chaque alvéole 18 débouche sur une première face 121 du coeur 12 et sur une seconde face 122 du coeur 18 située à l'opposé de la première face 121. La première face 121 du coeur 12 est en contact avec la couche d'entrée 14 et est destinée à être orientée vers la veine d'air, primaire 7 ou secondaire 8 selon l'emplacement du panneau de traitement acoustique 10. La seconde face 122 du coeur 12 est en contact avec la couche réfléchissante 16 et est destinée à être orientée à l'opposé de la veine d'air.

Selon le mode de réalisation, le coeur 12 peut être réalisé en métal, ou dans un matériau composite, tel qu'un matériau composite formé de fibres de carbone ou de verre noyées dans une matrice de résine durcie.

La couche d'entrée 14 peut être une plaque monobloc formée par fabrication additive. La couche d'entrée 14 présente une première face 141 en contact avec un écoulement fluidique tel que le flux F et une seconde face 142 opposée à la première face 141 et en regard du coeur 12 et de la couche réfléchissante 16. Au moins une portion de la couche d'entrée 14 est poreuse.

La couche réfléchissante 16 est adaptée pour réfléchir des ondes acoustiques présentant une fréquence appartenant à la plage de fréquences prédéterminée. Elle est solidaire des parois 1820 de l'enceinte 182 des alvéoles 18 du coeur 12 au niveau de sa seconde face 122. Elle peut être fixée au coeur 12 par collage par exemple. Selon le mode de réalisation, la couche réfléchissante 16 peut être réalisée en métal ou dans un matériau composite, tel qu'un matériau composite formé de fibres de carbone ou de verre noyées dans une matrice de résine durcie.

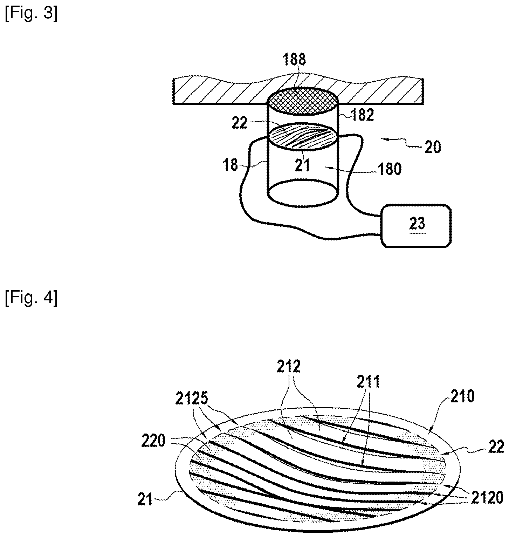

Sur la figure 3 est illustrée une vue schématique en perspective d'une cellule de traitement acoustique 18 du coeur 12 du panneau de traitement acoustique 10 de la figure 2.

La cellule de traitement acoustique 18 qui comporte la cavité résonante 180 délimitée par l'enceinte 182, ici cylindrique à base circulaire, comprend en outre une grille de protection 188, une pastille résonante 20 insérée à l'intérieur de la cavité résonante 180.

La grille de protection 188 comprend une structure perforée ou micro-perforée ou un wiremesh de protection pour réduire l'impact direct de l'écoulement. Cette grille de protection 188 est montée sur l'extrémité de l'enceinte 182 destinée à être en regard d'un écoulement fluidique, c'est-à-dire à l'extrémité de l'enceinte 182 formant partie de la première face 121 du coeur 12 en contact avec la couche d'entrée 14 du panneau de traitement acoustique 10.

La pastille résonante 20 de traitement acoustique comprend une plaque résonante 21 avec un module de Young élevé, un transducteur 22 et un circuit électrique 23 électriquement raccordé au transducteur 22.

Comme cela est illustré plus clairement sur la figure 4 qui présente la plaque résonante 21 selon un premier mode de réalisation, la plaque résonante 21 comporte un bandeau périphérique 210 s'étendant le long du périmètre de la plaque, ainsi que des découpes rectilignes 211 définissant entre elles des lamelles 212 déformables.

Dans le premier mode de réalisation illustré sur la figure 4, les lamelles déformables 212 comportent une première extrémité 2120 et une seconde extrémité 2125, toutes deux solidaires du bandeau périphérique 210.

Dans le premier mode de réalisation, la plaque résonante 21 comporte avec une forme générale circulaire, des découpes rectilignes 211 parallèles entre elles et séparées d'un même espace avec les découpes adjacentes pour avoir des lamelles 212 ayant toutes la même largeur permettant d'avoir facilement des lamelles de longueurs différentes et ainsi d'avoir une plage fréquentielle de traitement acoustique plus importante qu'avec des lamelles toutes de la même longueur, comme ce serait le cas pour une plaque résonante ayant une forme générale rectangulaire avec des lamelles toutes de même largeur.

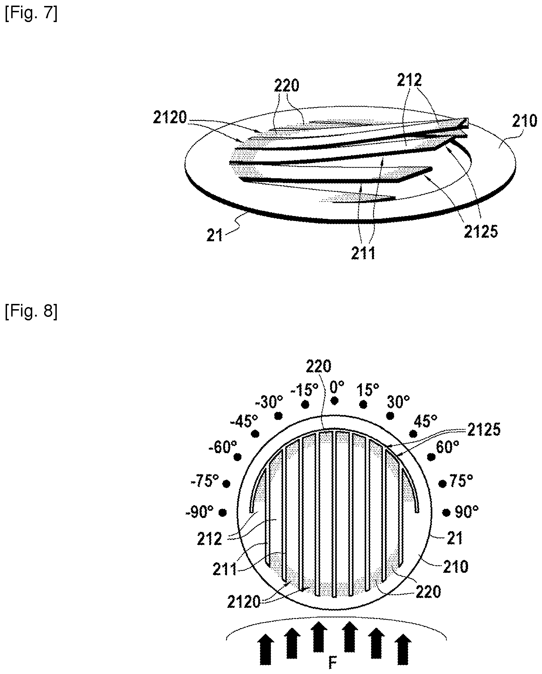

Sur la figure 7 est illustrée une plaque résonante 21 selon un deuxième mode de réalisation. Le deuxième mode de réalisation illustré sur la figure 7 diffère du premier mode de réalisation illustré sur la figure 4 en ce que seule la première extrémité 2120 des lamelles déformables 212 est solidaire du bandeau périphérique 210, la seconde extrémité 2125 étant libre.

Le comportement de la plaque résonante 21 face à un écoulement aérodynamique varie selon l'angle d'incidence de l'écoulement ainsi que du sens.

Dans l'exemple illustré sur la figure 1, dans lequel les panneaux de traitement acoustique 10 comprenant les cellules de traitement acoustique 18 sont montés sur les parois d'une turbomachine 1, l'écoulement fluidique F s'écoule principalement selon la direction axiale D_{A} de la turbomachine 1.

L'orientation de la plaque résonante 21 à l'intérieur d'une cellule de traitement acoustique 18 est définie par un angle formé entre la direction des lamelles 212 et la direction de l'écoulement fluidique F, autrement dit entre la direction des lamelles 212 et la direction axiale D_{A} de la turbomachine 1.

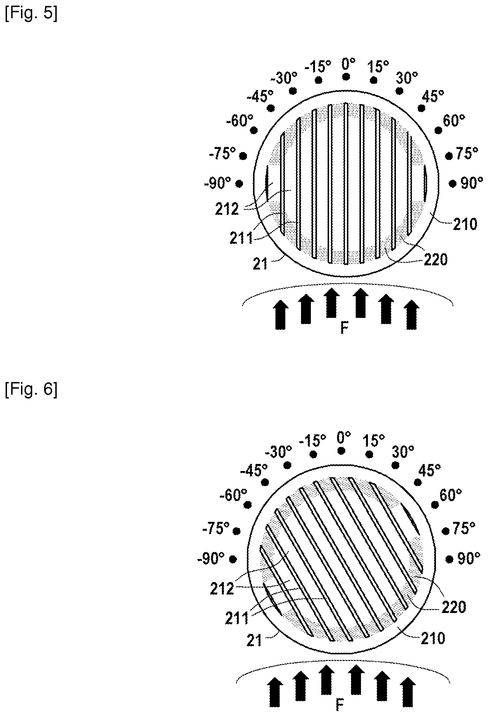

La plaque résonante 21 selon le premier mode de réalisation illustré sur la figure 4 peut fonctionner de façon opérationnelle avec une orientation définie par un angle compris entre -30° et 30° par rapport à la direction axiale D_{A} comme le montre les figures 5 et 6 qui présentent respectivement une plaque résonante 21 selon le premier mode de réalisation avec une orientation à 0° et une orientation à -30° par rapport au sens d'un écoulement fluidique F, c'est-à-dire par rapport à la direction axiale D_{A} de la turbomachine 1.

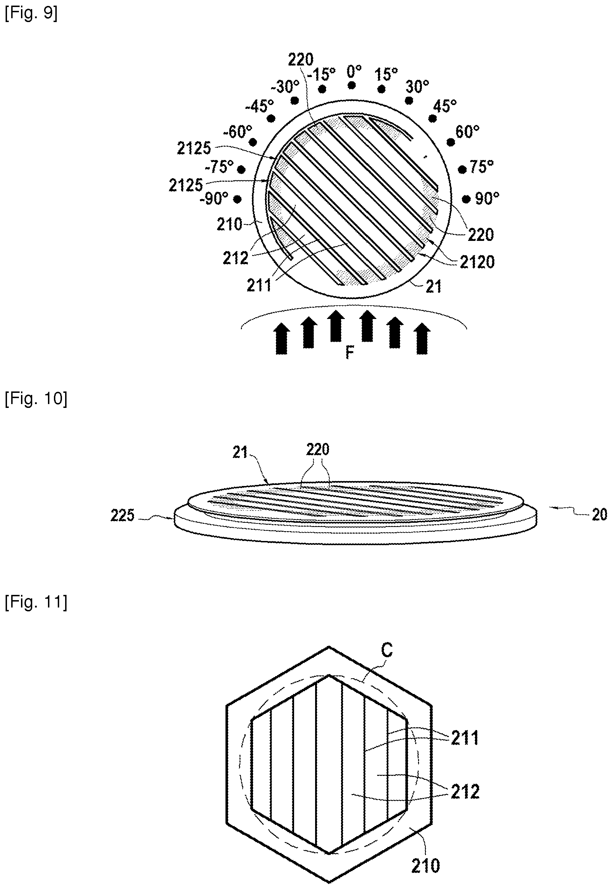

La plaque résonante 21 selon le deuxième mode de réalisation illustré sur la figure 7 peut fonctionner de façon opérationnelle avec une orientation définie par un angle compris entre -45° et 45° par rapport à la direction axiale D_{A} comme le montre les figures 8 et 9 qui présentent respectivement une plaque résonante 21 selon le deuxième mode de réalisation avec une orientation à 0° et une orientation à -45° par rapport au sens de l'écoulement fluidique F, c'est-à-dire par rapport à la direction axiale D_{A} de la turbomachine 1.

Le premier mode de réalisation peut fonctionner dans les deux sens d'écoulement (réversible), contrairement au deuxième mode de réalisation qui fonctionne mieux dans le sens présenté sur les figures 8 et 9, c'est-à-dire avec l'écoulement arrivant depuis la première extrémité 2120, celle solidaire du bandeau périphérique 210.

Selon les modes de réalisation, le transducteur 21 peut être de différentes formes.

Selon un premier exemple, le transducteur 21 peut être un transducteur électrodynamique comportant une couche mince 220 d'un matériau électriquement conducteur sur les lamelles 212 et un aimant 225, comme par exemple un aimant annulaire, sur lequel est disposée la plaque résonante 21, comme cela est illustré sur la figure 10. La couche 220 de matériau conducteur peut être réalisée par un dépôt de cuivre aux endroits présentant le maximum de débattement pour y former une bobine de cuivre.

Selon un second exemple, le transducteur 21 peut être un transducteur piézoélectrique comportant une couche mince 220 sur les zones de contraintes maximales des lamelles 212, telle qu'aux extrémités des lamelles solidaires de la bande périphérique pour maximiser l'effet selon les phases, c'est-à-dire à la première extrémité 2120 et éventuellement à la seconde extrémité 2125 pour le deuxième mode de réalisation illustré sur les figures 7 à 9.

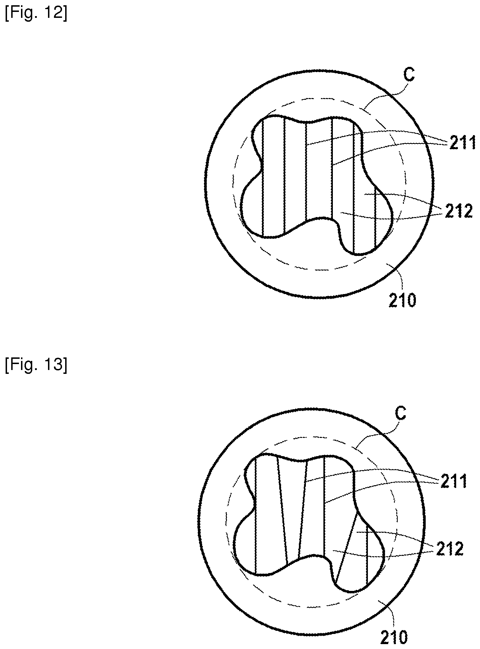

Sur les figures 11 à 13 sont illustrées schématiquement un troisième, un quatrième et un cinquième modes de réalisation de la plaque résonante 21.

Le troisième mode de réalisation illustré sur la figure 8 diffère du premier mode de réalisation illustré sur la figure 7 en ce que la forme générale de la plaque résonante 21 est un hexagone. Cette forme hexagonale permet de facilement s'adapter aux cellules de traitement acoustiques 18 hexagonales comme celles présentées sur la figure 2 par exemple.

Le quatrième mode de réalisation illustré sur la figure 9 diffère du premier mode de réalisation illustré sur la figure 7 en ce que la forme générale de la plaque résonante 21 est une forme totalement quelconque. Et le cinquième mode de réalisation illustré sur la figure 10 diffère du quatrième mode de réalisation illustré sur la figure 9 en ce que les découpes 21 ne sont pas parallèles ce qui permet d'obtenir des lamelles à largeur non constantes et ainsi d'avoir un second levier d'action sur les fréquences de résonance des lamelles et donc de la plage de fréquence d'atténuation possible.

Dans tous les modes de réalisations illustrés, la plaque résonante 21 peut avoir une forme s'inscrivant dans un cercle C dont le diamètre est compris entre 5 et 50 mm, et les lamelles 212 peuvent avoir une longueur comprise entre 1 et 50 mm, une largeur comprise entre 0,5 et 20 mm, et une épaisseur comprise entre 20 µm et 2 mm.

Les découpes 211 entre les lamelles 212 peuvent être formées des fentes ayant une largeur comprise entre 10 µm et 1 mm.

Le panneau de traitement acoustique 10 comprend donc une pluralité de cellules de traitement acoustiques 18 dotées de pastilles résonantes 20 qui peuvent être accordées toutes sur une même fréquence pour avoir une performance très bonne acoustiquement mais moins large bande, ou bien accordées sur différentes fréquences afin d'avoir une efficacité moins importante sur les fréquences mais sur une bande fréquentielle beaucoup plus large.

Le panneau de traitement acoustique selon l'invention fournit ainsi une solution de traitement acoustique optimisée pour des atténuations à basses fréquences et dont le spectre d'atténuation est plus large dans un encombrement réduit permettant d'être intégrée dans des architectures propulsives à taux de dilution élevé.

## Revendications

1. Pastille résonante (20) de traitement acoustique pour cellule de traitement acoustique d'un panneau acoustique d'une turbomachine d'un aéronef, la pastille résonante (20) comprenant une plaque résonante (21), la plaque résonante (21) comportant un bandeau périphérique (210) s'étendant le long du périmètre de la plaque résonante (21), la plaque résonante (21) comprenant des découpes (211) définissant entre elles des lamelles (212) déformables ayant au moins une extrémité (2120) solidaire du bandeau périphérique (210);
**caractérisée en ce que** la pastille résonante (20) comprend un transducteur (22) et un circuit électrique (23) électriquement raccordé au transducteur (22).

2. Pastille résonante (20) de traitement acoustique selon la revendication 1, dans laquelle les découpes (211) de la plaque résonante (21) sont des découpes rectilignes définissant entre elles des lamelles (212) polygonales.

3. Pastille résonante (20) de traitement acoustique selon l'une des revendications 1 ou 2, comprenant au moins deux lamelles (212) de dimensions différentes.

4. Pastille résonante (20) de traitement acoustique selon l'une des revendications 1 à 3, dans laquelle la plaque résonante (21) a une forme s'inscrivant dans un cercle de diamètre D compris entre 5 et 50 mm, et les lamelles (212) ont une longueur comprise entre 1 et 50 mm.

5. Pastille résonnante (20) de traitement acoustique selon l'une des revendications 1 à 4, dans laquelle les lamelles (212) comprennent une largeur comprise entre 0,5 et 20 mm.

6. Pastille résonnante (20) de traitement acoustique selon l'une des revendications 1 à 5, dans laquelle les lamelles (212) ont une épaisseur comprise entre 20 µm et 2 mm.

7. Pastille résonnante (20) de traitement acoustique selon l'une des revendications 1 à 6, dans laquelle les découpes (211) ont une largeur comprise entre 10 µm et 1 mm.

8. Pastille résonnante (20) de traitement acoustique selon l'une des revendications 1 à 7, dans laquelle les découpes (211) sont parallèles entre elles.

9. Pastille résonnante (20) de traitement acoustique selon l'une des revendications 1 à 7, dans laquelle deux découpes (211) adjacentes sont dépourvues de parallélisme.

10. Pastille résonnante (20) de traitement acoustique selon l'une des revendications 1 à 9, dans laquelle les lamelles (212) comprennent deux extrémités (2120, 2125) selon la direction de la longueur, les deux extrémités (2120, 2125) étant solidaires du bandeau périphérique (210).

11. Pastille résonnante (20) de traitement acoustique selon l'une des revendications 1 à 10, dans laquelle la plaque (21) comprend un matériau avec un module de Young élevé.

12. Pastille résonnante (20) de traitement acoustique selon l'une des revendications 1 à 11, dans laquelle le transducteur (22) est un transducteur piézoélectrique comportant une couche mince (220) sur les zones de déformations maximales des lamelles, telle qu'aux extrémités des lamelles solidaires de la bande périphérique (210).

13. Pastille résonnante (20) de traitement acoustique selon l'une des revendications 1 à 12, dans laquelle le transducteur (22) est un transducteur électrodynamique comportant une couche mince (220) d'un matériau électriquement conducteur sur les lamelles (212) et un aimant (225).

14. Cellule (18) de traitement acoustique comprenant une enceinte (182), une cavité (180) délimitée par l'enceinte (182), et une pastille résonante (20) selon l'une des revendications 1 à 13 disposée dans la cavité (180).

15. Cellule (18) de traitement acoustique selon la revendication 14, comprenant en outre une grille de protection (188) montée sur une extrémité de l'enceinte (182) destinée à être en regard d'un écoulement fluidique.

16. Panneau de traitement acoustique (10) destiné à être disposé sur au moins une paroi d'un turboréacteur (1) en contact avec un écoulement fluidique, le panneau (10) comprenant une première plaque (16), une seconde plaque (14) parallèle à la première plaque (16) et présentant une première face (141) destinée à être en contact avec un écoulement fluidique et une seconde face (142) en regard de la première plaque (16), **caractérisé en ce qu'**il comprend en outre des cellules de traitement acoustique (18) selon l'une des revendications 14 ou 15 s'étendant entre les première et seconde plaques (16, 14).

17. Turbomachine pour aéronef comprenant au moins un panneau de traitement acoustique selon la revendication 16.

## Patentansprüche

1. Resonanzelement (20) zur akustischen Behandlung für eine akustische Behandlungszelle eines Akustik-Paneels einer Turbomaschine eines Luftfahrzeugs, wobei das Resonanzelement (20) eine Resonanzplatte (21) umfasst, wobei die Resonanzplatte (21) einen umlaufenden Streifen (210) beinhaltet, der sich entlang des Umfangs der Resonanzplatte (21) erstreckt, wobei die Resonanzplatte (21) Einschnitte (211) umfasst, die zwischen einander verformbare Lamellen (212) definieren, die zumindest ein mit dem umlaufenden Streifen (210) fest verbundenes Ende (2120) aufweisen, **dadurch gekennzeichnet, dass** das Resonanzelement (20) einen Wandler (22) und einen elektrischen Kreis (23) umfasst, der elektrisch mit dem Wandler (22) verbunden ist.

2. Resonanzelement (20) zur akustischen Behandlung nach Anspruch 1, wobei die Einschnitte (211) der Resonanzplatte (21) geradlinige Einschnitte sind, die zwischen einander vieleckige Lamellen (212) definieren.

3. Resonanzelement (20) zur akustischen Behandlung nach einem der Ansprüche 1 oder 2, umfassend zumindest zwei Lamellen (212) mit unterschiedlichen Dimensionen.

4. Resonanzelement (20) zur akustischen Behandlung nach einem der Ansprüche 1 bis 3, wobei die Resonanzplatte (21) eine Form aufweist, die sich in einen Kreis mit dem Durchmesser D zwischen 5 und 50 mm einschreibt, und die Lamellen (212) eine Länge zwischen 1 und 50 mm aufweisen.

5. Resonanzelement (20) zur akustischen Behandlung nach einem der Ansprüche 1 bis 4, wobei die Lamellen (212) eine Breite zwischen 0,5 und 20 mm umfassen.

6. Resonanzelement (20) zur akustischen Behandlung nach einem der Ansprüche 1 bis 5, wobei die Lamellen (212) eine Stärke zwischen 20 µm und 2 mm umfassen.

7. Resonanzelement (20) zur akustischen Behandlung nach einem der Ansprüche 1 bis 6, wobei die Einschnitte (211) eine Breite zwischen 10 µm und 1 mm umfassen.

8. Resonanzelement (20) zur akustischen Behandlung nach einem der Ansprüche 1 bis 7, wobei die Einschnitte (211) parallel zueinander sind.

9. Resonanzelement (20) zur akustischen Behandlung nach einem der Ansprüche 1 bis 7, wobei zwei benachbarte Einschnitte (211) keinerlei Parallelität aufweisen.

10. Resonanzelement (20) zur akustischen Behandlung nach einem der Ansprüche 1 bis 9, wobei die Lamellen (212) zwei Enden (2120, 2125) entlang der Längsrichtung umfassen, wobei die zwei Enden (2120, 2125) mit dem umlaufenden Streifen (210) fest verbunden sind.

11. Resonanzelement (20) zur akustischen Behandlung nach einem der Ansprüche 1 bis 10, wobei die Platte (21) ein Material mit einem erhöhten Youngschen Modul umfasst.

12. Resonanzelement (20) zur akustischen Behandlung nach einem der Ansprüche 1 bis 11, wobei der Wandler (22) ein piezoelektrischer Wandler ist, der eine Dünnschicht (220) auf den maximalen Verformungszonen der Lamellen beinhaltet, wie etwa auf den Enden der Lamellen, die mit dem umlaufenden Streifen (210) fest verbunden sind.

13. Resonanzelement (20) zur akustischen Behandlung nach einem der Ansprüche 1 bis 12, wobei der Wandler (22) ein elektrodynamischer Wandler ist, der eine Dünnschicht (220) eines elektrisch leitenden Materials auf den Lamellen (212) und einen Magnet (225) beinhaltet.

14. Zelle (18) zur akustischen Behandlung, umfassend ein Gehäuse (182), einen durch das Gehäuse (182) begrenzten Hohlraum (180) und ein Resonanzelement (20) nach einem der Ansprüche 1 bis 13, das in dem Hohlraum (180) angeordnet ist.

15. Zelle (18) zur akustischen Behandlung nach Anspruch 14, ferner umfassend ein Schutzgitter (188), das an einem Ende des Gehäuses (182) montiert und dazu bestimmt ist, einer Fluidströmung zugewandt zu sein.

16. Paneel zur akustischen Behandlung (10), das dazu bestimmt ist, an zumindest einer Wand eines Turbinenstrahlwerks (1), die mit einer Fluidströmung in Kontakt steht, angeordnet zu werden, wobei das Paneel (10) eine erste Platte (16) und eine zweite Platte (14) umfasst, die parallel zu der ersten Platte (16) ist und eine erste Seite (141), die dazu bestimmt ist, mit einer Fluidströmung in Kontakt zu stehen, und eine zweite Seite (142) aufweist, die der ersten Platte (16) zugewandt ist, **dadurch gekennzeichnet, dass** es ferner Zellen zur akustischen Behandlung (18) nach einem der Ansprüche 14 oder 15 umfasst, die sich zwischen der ersten und zweiten Platte (16, 14) erstrecken.

17. Turbomaschine für ein Luftfahrzeug, umfassend zumindest ein Paneel zur akustischen Behandlung nach Anspruch 16.

## Claims

1. A resonating patch (20) for acoustic treatment for a cell for acoustic treatment of an acoustic panel of a turbomachine of an aircraft, the resonating patch (20) comprising a resonant plate (21), the resonant plate (21) comprising a peripheral strip (210) extending along the perimeter of the resonant plate (21), the resonant plate (21) comprising cut-outs (211) together defining deformable lamellae (212) having at least one end (2120) connected to the peripheral strip (210)
**characterised in that** the resonating patch (20) comprises a transducer (22) and an electrical circuit (23) electrically connected to the transducer (22).

2. The resonating patch (20) for acoustic treatment according to claim 1, wherein the cut-outs (211) of the resonant plate (21) are rectilinear cut-outs together defining polygonal lamellae (212).

3. The resonating patch (20) for acoustic treatment according to any one of claims 1 or 2, comprising at least two lamellae (212) of different dimensions.

4. The resonating patch (20) for acoustic treatment according to any one of claims 1 to 3, wherein the resonant plate (21) has a form entered in a circle of diameter D between 5 and 50 mm, and the lamellae (212) have a length of between 1 and 50 mm.

5. The resonating patch (20) for acoustic treatment according to any one of claims 1 to 4, wherein the lamellae (212) comprise a width of between 0.5 and 20 mm.

6. The resonating patch (20) for acoustic treatment according to any one of claims 1 to 5, wherein the lamellae (212) have a thickness between 20 µm and 2 mm.

7. The resonating patch (20) for acoustic treatment according to any one of claims 1 to 6, wherein the cut-outs (211) have a width of between 10 µm and 1 mm.

8. The resonating patch (20) for acoustic treatment according to any one of claims 1 to 7, wherein the cut-outs (211) are parallel to each other.

9. The resonating patch (20) for acoustic treatment according to any one of claims 1 to 7, wherein two adjacent cutouts (211) are devoid of parallelism.

10. The resonating patch (20) for acoustic treatment according to any one of claims 1 to 9, wherein the lamellae (212) comprise two ends (2120, 2125) according to the direction of the length, the two ends (2120, 2125) being attached to the peripheral strip (210).

11. The resonating patch (20) for acoustic treatment according to any one of claims 1 to 10, wherein the plate (21) comprises material with a high Young's module.

12. The resonating patch (20) for acoustic treatment according to any one of claims 1 to 11, wherein the transducer (22) is a piezoelectric transducer comprising a thin layer (220) on the zones of maximal deformations of lamellae, such as at the ends of the lamellae attached to the peripheral strip (210).

13. The resonating patch (20) for acoustic treatment according to any one of claims 1 to 12, wherein the transducer (22) is an electrodynamic transducer comprising a thin layer (220) of an electrically conductive material on the lamellae (212) and a magnet (225).

14. A cell (18) for acoustic treatment comprising an enclosure (182), a cavity (180) delimited by the enclosure (182), and a resonating patch (20) according to any one of claims 1 to 13 arranged in the cavity (180).

15. The cell (18) for acoustic treatment according to claim 14, also comprising a protective grille (188) mounted on an end of the enclosure (182) intended to be opposite a fluidic flow.

16. A panel for acoustic treatment (10) intended to be arranged on at least one wall of a turbojet (1) in contact with a fluidic flow, the panel (10) comprising a first plate (16), a second plate (14) parallel to the first plate (16) and having a first face (141) intended to be in contact with a fluidic flow and a second face (142) opposite the first plate (16),
**characterised in that** it also comprises cells for acoustic treatment (18) according to any one of claims 14 or 15 extending between the first and second plates (16, 14).

17. A turbomachine for an aircraft comprising at least one panel for acoustic treatment according to claim 16.
